Europäisches Patentamt

European Patent Office

Office européen des brevets

(11) Publication number: **0 210 143**
**B1**

# EUROPEAN PATENT SPECIFICATION

(45) Date of publication of patent specification: **07.12.88**

(21) Application number: **86830208.4**

(22) Date of filing: **17.07.86**

(51) Int. Cl.⁴: **D 06 F 37/26,** F 16 B 2/08,
F 16 L 23/04

(54) **Open joining ring, in particular for connecting the peripheral flanges of the two elements forming the washing tank of a washing machine.**

(30) Priority: **19.07.85 IT 5360985 u**

(43) Date of publication of application:
**28.01.87 Bulletin 87/05**

(45) Publication of the grant of the patent:
**07.12.88 Bulletin 88/49**

(84) Designated Contracting States:
**AT BE CH DE FR GB IT LI LU NL SE**

(56) References cited:
**FR-A-1 168 135**
**FR-A-2 296 048**
**FR-A-2 355 943**
**FR-A-2 359 924**
**GB-A- 203 520**

(73) Proprietor: **LEMP S.n.c. di PIANI G. e SASSO A.**
**Via Piave 5 bis**
**I-10093 Collegno Torino (IT)**

(72) Inventor: **Piani, Giorgio**
**Strada Truc Carlevé 22**
**I-10090 Villarbasse Torino (IT)**

(74) Representative: **Notaro, Giancarlo et al**
**c/o Jacobacci-Casetta & Perani S.p.A. Via Alfieri,**
**17**
**I-10121 Torino (IT)**

Courier Press, Leamington Spa, England.

## Description

The present invention relates to open joining rings, in particular for connecting the peripheral flanges of the two elements forming the washing tank of a washing machine, of the type consisting of a channel-shaped element, which is curved so as to form a ring and made of metallic material and which has two lateral wings and a central bottom wall which define a substantially C-shaped cross section, with the cavity facing the axis of the ring; the said channel-shaped element having at its two adjacent ends respective passages for engagement of a tangential clamping bolt.

Rings of the abovementioned type have been known and used for some time, the adjacent ends of these rings being bent outwards, substantially at right angles in relation to the adjacent part of the ring, and having a pair of facing holes for engagement of the clamping bolt. The rings of this type are not completely satisfactory during use, owing to the tendency of the two deformed ends of the ring to be further deformed as a result of the pulling of the bolt, at the same time preventing correct clamping of the connected parts. Rings are also known, the adjacent ends of which are provided with welded auxiliary elements having aligned passages for engagement of the clamping bolt. The rings of the latter type enable the connected parts to be effectively clamped in the required manner, but are complicated and costly to manufacture.

The object of the invention is to provide a ring of the type mentioned at the beginning of the present description, which is both functional and simple and economic to manufacture.

The main characteristic feature of the ring according to the invention consists in the fact that the abovementioned channel-shaped element has, at each of its ends, a portion staggered radially outwards, which also has the cavity facing the axis of the ring, said staggered portion being formed as a single piece with the ring, and in that the part of the bottom wall of the channel-shaped element which connects the bottom wall of each end portion to that of the immediately adjacent part of the channel-shaped element has a hole which defines, together with the cavity of the said end portion, a passage for engagement of the clamping bolt.

In a preferred embodiment, the two abovementioned end portions are able to fit one inside the other when the bolt is clamped, so as to improve further the clamping efficiency.

The end portions staggered radially outwards are obtained by means of cold deformation of the profiled element, preferably performed at the same time as punching of the abovementioned hole in the end wall of the profiled element.

Further characteristic features and advantages of the invention will emerge from the description which follows with reference to the attached drawings, provided purely by way of a nonlimiting example, in which:

Figure 1 is a partial sectional view of a ring according to the invention during use;

Figure 2 is a front view of the two end portions of the ring shown in Figure 1, when not in use;

Figure 3 shows the two end portions when clamped;

Figures 4 and 5 show the end of the profiled element forming the ring according to the invention, respectively before and after the operation required to produce the part for engaging the clamping bolt;

Figure 6 is an exploded perspective view of Figure 3, and

Figure 7 shows a preferred variant of the ring shown in Figure 3.

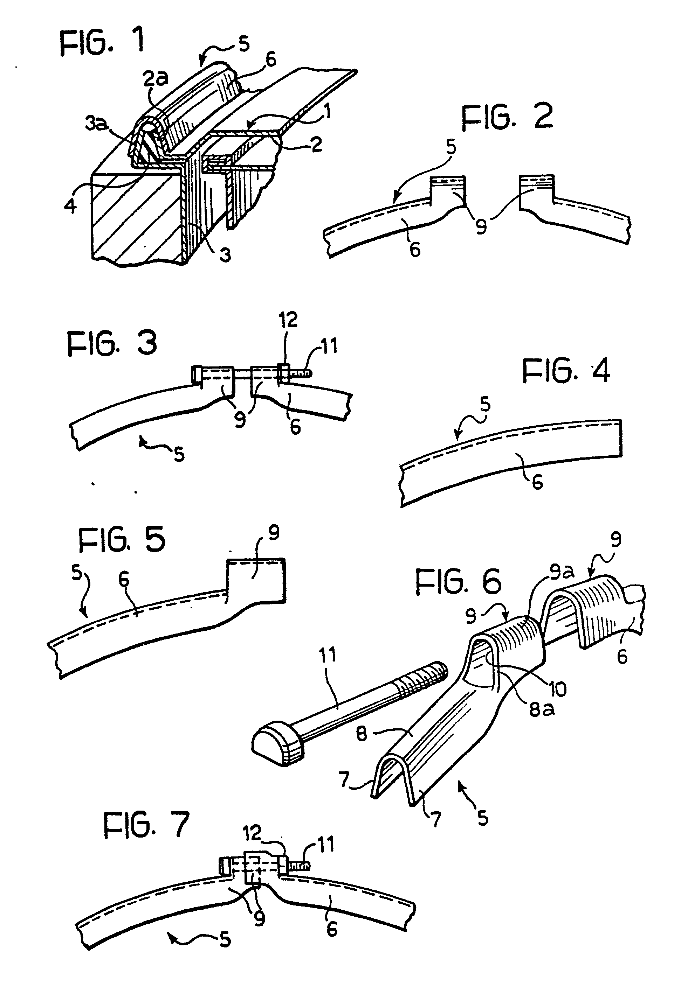

Figure 1 shows a detail of a washing tank 1 of a washing machine, the body of which consists of a substantially cup-shaped element 2 and of a disc 3 which closes the mouth of the cup-shaped element 2 at the front and which has an opening in the centre (not visible in the Figure) for introducing the laundry. At their joining edges, the elements 2, 3 have two circumferential flanges 2a, 3a between which a seal 4 is placed. The two flanges 2a, 3a are connected to each other by an open joining ring 5 of the type forming the subject of the present invention (obviously the ring according to the invention can also be used with tank structures of a type different from that shown in which the joining flanges are provided in a plane equidistant from the two end faces of the tank or on the rear face rather than the front face as in the example shown). The ring 5 consists of a channel-shaped element 6 made of metallic material and having two lateral wings 7 and a central bottom wall 8 which define a substantially C-shaped cross-section, with the cavity facing the axis of the ring. The channel-shaped element 6 has, at each of its two adjacent ends, a part 9 staggered radially outwards, itself also having the cavity facing the axis of the ring. The end part 9 is obtained by means of cold plastic deformation of the channel-shaped element. Figures 3 and 4 show the end portion before and after plastic deformation, respectively. The section 8a of the bottom wall 8, which connects the bottom wall 9a of the end portion 9 to the bottom wall of the immediately adjacent section of the channel-shaped element, has a hole 10 obtained by means of punching. The hole 10 and the cavity of the respective end portion 9 form a passage through which a screw 11 can be inserted. The screw 11 is intended to pass through both the end portions 9 so as to permit together with a clamping nut 12, clamping of the ring 5 onto the flanges 2a, 3a. The bolt consisting of the screw 11 and the nut 12 therefore forms a bolt for tangentially clamping the ring 5, enabling the two end portions 9 to be moved towards each other from the inoperative position shown in Figure 2.

Figure 7 shows a different embodiment in which the end portions 9 of the channel-shaped element 6 are shaped so as to fit one inside the other when the ring is clamped, so as to make the connection more secure.

Preferably, the operation required to deform the channel-shaped element 6 so as to define the end portion 9 staggered radially outwards and the operation required to make the hole 10 in each end portion 9 are performed simultaneously.

Obviously, the principle of the invention remaining the same, the constructional details and the embodiments may vary widely within the scope of the claims with respect to that which has been described and illustrated purely by way of example.

## Claims

1. Open joining ring, in particular for connecting the peripheral flanges of the two elements forming the tank of a washing machine, consisting of a channel-shaped element (6) which is curved so as to form a ring and made of metallic material and which has two lateral wings (7) and a central bottom wall (8) which define a substantially C-shaped cross-section, with the cavity facing the axis of the ring; the said channel-shaped element (6) having at its two adjacent ends respective passages for engagement of a tangential clamping bolt, characterized in that the said channel-shaped element has, at each of its ends, a portion (9) staggered radially outwards, which also has its cavity facing the axis of the ring, said staggered portion being formed as a single piece with the abovementioned channel-shaped element, and in that the part of the bottom wall (8a) of the channel-shaped element which connects the bottom wall (9a) of each end portion to that of the immediately adjacent part of the channel-shaped element has a hole (10) which defines, together with the cavity of the end portion (9), a passage for engagement of the clamping bolt.

2. Ring according to Claim 1, characterized in that the two end portions (9) are fitted one inside the other when the ring is clamped.

3. Ring according to Claim 1, characterized in that each end portion (9) is obtained by means of cold plastic deformation of the channel-shaped element (6).

## Patentansprüche

1. Offener Verbindungsring, insbesonders für die Verbindung der peripheren Flansche der beiden Elemente, die den Behälter einer Waschmaschine bilden, wobei der offene Verbindungsring aus einem kanalartigen Element (6) besteht, das gebogen ist, um einen Ring zu bilden, und aus einem metallischen Werkstoff hergestellt ist und zwei Seitenflügel (7) sowie eine mittlere Bodenwand (8) besitzt, die einen im wesentlichen C-förmigen Querschnitt bilden, wobei der Hohlraum zur Ringachse gerichtet ist; wobei das kanalartige Element (6) an seinen beiden benachbarten Enden Durchlässe besitzt, um mit einem tangentialen Spannbolzen in Eingriff zu treten, dadurch gekennzeichnet, daß das kanalartige Element an jedem seiner Enden einen Teil (9) besitzt, der radial nach außen abgestuft ist, wobei auch hier der Hohlraum zur Ringachse gerichtet ist, wobei der abgestufte Teil aus einem einzigen Stück mit dem oben erwähnten kanalartigen Element gebildet wird, und wobei der Teil der Bodenwand (8a) des kanalartigen Elements, der die Bodenwand (9a) eines jeden Enteils mit dem unmittelbar benachbarten Teil des kanalartigen Elements verbindet, eine Öffnung (10) besitzt, die zusammen mit dem Hohlraum des Endteils (9) einen Durchlaß bildet, um mit dem Spannbolzen in Eingriff zu treten.

2. Ring gemäß Anspruch 1, dadurch gekennzeichnet, daß die beiden Endteile (9) ineinander sitzen, wenn der Ring gespannt ist.

3. Ring gemäß Anspruch 1, dadurch gekennzeichnet, daß man jeden Endteil (9) durch eine plastische Kaltverformung des kanalartigen Elements (6) erhält.

## Revendications

1. Anneau ouvert d'assemblage, en particulier pour assembler les rebords périphériques des deux éléments formant la cuve d'une machine à laver, consistant en un élément (6) de section en auge, qui est courbé en un anneau, est fait de métal et possède deux ailes latérales (7) et une base centrale ou fond (8), définissant ensemble une section droite à peu près en C dont la cavité est dirigée vers l'axe de l'anneau, les deux extrémités à réunir de cet élément en auge (6) présentant des passages pour un boulon de serrage tangentiel, caractérisé en ce que l'élément en auge présente, à chacune de ses extrémités, une partie (9) décalée radialement vers l'extérieur, dont la cavité est également dirigée vers l'axe de l'anneau, partie décalée qui est formée d'un seul tenant avec l'élément en auge, et que la partie de fond (8a) de l'élément en auge reliant le fond (9a) de chaque partie extrême décalée à la partie immédiatement voisine de l'élément en auge présente un trou (10) qui définit, ensemble avec la cavité de la partie extrême décalée (9), un passage pour le boulon de serrage.

2. Anneau selon la revendication 1, caractérisé en ce que les deux parties extrêmes (9) s'emboîtent l'une dans l'autre lorsque l'anneau est serré.

3. Anneau selon la revendication 1, caractérisé en ce que chaque partie extrême (9) est obtenue par une déformation plastique à froid de l'élément en auge (6).

FIG. 1

FIG. 2

FIG. 3

FIG. 4

FIG. 5

FIG. 6

FIG. 7

1